(19)

**Europäisches Patentamt**

**European Patent Office**

**Office européen des brevets**

(11)　**EP 2 756 745 A1**

(12)　# EUROPÄISCHE PATENTANMELDUNG

(43) Veröffentlichungstag:
　　 **23.07.2014 Patentblatt 2014/30**

(51) Int Cl.:
　　 *A01C 17/00* (2006.01)　　 *A01C 21/00* (2006.01)
　　 *G01F 1/66* (2006.01)

(21) Anmeldenummer: **13151550.4**

(22) Anmeldetag: **17.01.2013**

(84) Benannte Vertragsstaaten:
　　 **AL AT BE BG CH CY CZ DE DK EE ES FI FR GB GR HR HU IE IS IT LI LT LU LV MC MK MT NL NO PL PT RO RS SE SI SK SM TR**
　　 Benannte Erstreckungsstaaten:
　　 **BA ME**

(71) Anmelder: **MSO Messtechnik und Ortung GmbH**
　　 **53902 Bad Münstereifel-Schönau (DE)**

(72) Erfinder:
　　 • **Krauland, Thorsten**
　　　 **53902 Bad Münstereifel (DE)**
　　 • **Hien, Peter**
　　　 **53902 Bad Münstereifel (DE)**

(74) Vertreter: **Limbeck, Achim**
　　 **Rechtsanwaltskanzlei Dr. Limbeck**
　　 **In der Buch 9**
　　 **53902 Bad Münstereifel (DE)**

(54) **Verfahren zur Ermittlung der Verteilung eines Gutstroms mittels Mikrowellen, Sensoranordnung und entsprechende Vorrichtung**

(57)　Die vorliegende Erfindung betrifft ein Verfahren zur Ermittlung der Verteilung eines Gutstroms (3) im Abwurfbereich (1) sowie dessen flächiger Verteilung (Deposition) mittels Mikrowellen, umfassend mindestens eine Radareinrichtung (2), wobei die Erfassung der Gutstromparameter mittels Analyse der geschwindigkeitsproportionalen Frequenzverschiebung des durch die Gutstrompartikel (3) reflektierten Signals aufgrund des Dopplereffekts erfolgt und aus der Amplitude des Dopplersignals die Masse der Gutstrompartikel (3) ermittelt wird.

*Fig. 2*

EP 2 756 745 A1

**Beschreibung**

Technisches Gebiet

Die vorliegende Erfindung betrifft ein Verfahren zur Ermittlung der Verteilung eines geworfenen Gutstroms im Abwurfbereich sowie auf der Fläche mittels Mikrowellen, umfassend mindestens einen Radarsensor, wobei die Erfassung der Gutstromparameter mittels Analyse der geschwindigkeitsproportionalen Frequenzverschiebung des durch die Gutstrompartikel reflektierten Signals aufgrund des Dopplereffekts erfolgt und aus der Amplitude des Dopplersignals die Masse der Gutstrompartikel ermittelt wird. Der Begriff Gutstrompartikel wird hier einheitlich für Körner, Teilchen, Granulate, Splitte etc. sowie für Flüssigkeitstropfen verwendet.

Die Erfindung bezieht sich insbesondere auf die Ermittlung der Verteilung eines Gutstroms im Abwurfbereich und schließlich auf der bestreuten Fläche bei der Verwendung von Partikelstreuern mit einer zentrifugalen Verteilung der Partikel. Üblicherweise werden bei der Zentrifugalverteilung der Partikel ein oder mehrere Scheiben verwendet, die mit Schaufeln versehen und drehangetrieben sind und die Partikel somit in Form einer Streulage auf dem Boden verteilen (Deposition), die sich durch eine Verteilung entlang eines Winkels sowie entlang eines Auswurfradius kennzeichnet.

Weitere Anwendungsbereiche des erfindungsgemäßen Verfahrens beziehen sich unter anderem auf die Verteilung eines Gutstroms durch Auslegestreuer, z.B. Pneumatikstreuer, ballistische Sortieranlagen sowie die flächige Ausbringung von Flüssigkeiten, z.B. mittels Pflanzenschutzspritzen, Beregnungsanlagen oder dergleichen.

Stand der Technik

Aus dem Stand der Technik sind ballistische Verfahren zur Ermittlung der Flugweite einzelner Objekte z.B. Geschosse, Kugeln, Pfeile oder Bälle unlängst bekannt. Im militärischen Bereich sind dies z.B. Artillerieaufklärungsradare, die den Bewegungspfad eines Geschosses während der Laufzeit (Trajektorie) erfassen. Derartige Verfahren sind bspw. in EP0619023B1 sowie in DE102011012680B3 beschrieben. Weiterhin bekannt sind Radarverfahren im Sportbereich, welche die Trajektorie eines Balles, Pfeils oder eines Schlägers erfassen, z.B. US 6,547,671 B1. Derartige Verfahren sind allerdings gänzlich ungeeignet zur Erfassung von Gutströmen der vorliegenden Form.

Optische, bildgebende Verfahren in Kombination mit Bildverarbeitung befinden sich in der wissenschaftlichen Erprobung, sind aber im praktischen Einsatz nicht bekannt (Stroboskopie, berührungslose optische Verfahren zur Bestimmung von Geschwindigkeitsfeldern in der Strömungsmechanik (Particle Image Velocimetry (PIV)), optischer Fluss). Ein optisches, mittels Zeilensensoren den Gutstrom von Zeit zu Zeit abtastendes Verfahren zur Bestimmung der Partikelform und/oder Größe von landwirtschaftlichen Gutportikeln wurde in DE102004056520A1 vorgeschlagen.

Aus der Grundlagenforschung ist darüber hinaus ein Verfahren zur dreidimensionalen Messung von Geschwindigkeit, Objektgröße und Bewegungsrichtung mittels einer Anordnung eines Ultraschallsenders und drei Empfängern bekannt (Hofstee, J. agric. Engng Res. (1994) 58 1-16). Hierbei werden an einem Rahmen zwei vertikal versetzt angebrachte Sensoranordnungen horizontal und vertikal zur dreidimensionalen Erfassung der Gutstromparameter bewegt.

Bekannt sind überdies mechanische Verfahren, welche die Impulsenergie des auftreffenden Gutstroms messen und daraus die Verteilung ableiten. Diese Verfahren sind nicht kontinuierlich im Prozess einsetzbar, da sie die tatsächliche Verteilung stören und einem hohen Verschleiß durch die auftreffenden Partikel unterliegen. Stand der Technik ist hier ein vereinfachtes mechanisches Verfahren der Impulsenergiemessung an zwei Stiften, die in den Gutstrom ragen (Justax von Sulky - Burel S.A.S. Fr-Noyal sur Vilaine) zur Erfassung der Arbeitsbreite.

Bekannt sind weiterhin Verfahren zur absätzigen Erfassung der Verteilung z.B. für Versuchszwecke (bspw. DE102009004114A1, EP1610112B1, DD000000214988A1) mit Verwiegung von auf der Fläche aufgestellten oder linear angeordneten Behältern mit Schwenken der Streuereinheit.

Die Messung der Geschwindigkeit und Masse von Gutströmen mittels eines Radarverfahrens ist ferner Inhalt der Druckschriften DE102011100244A1, EP12002983A1 und US13/461,998A1. Hierbei erfolgt die Erfassung der Gutstromparameter mittels Analyse der geschwindigkeitsproportionalen Frequenzverschiebung des durch die Gutstrompartikel reflektierten Signals aufgrund des Dopplereffekts. Ferner wird dort vorgeschlagen, aus der Amplitude des Schwebungssignals die Gutstrommenge bzw. die Größe der Gutstrompartikel zu berechnen.

Darstellung der Erfindung

Der vorliegenden Erfindung liegt die Aufgabe zu Grunde, ein Verfahren zu schaffen, welches die Ermittlung der Verteilung von Gutströmen im Abwurfbereich sowie deren Deposition in Echtzeit erlaubt, insbesondere wenn es sich bei dem Gutstrom um ein Partikelkollektiv mit unterschiedlicher Größe, Form, Masse und Geschwindigkeiten der Partikel handelt.

Erfindungsgemäß wird die voranstehende Aufgabe mit den Merkmalen des Anspruchs 1 gelöst. Vorteilhafte Ausgestaltungen des erfindungsgemäßen Verfahrens sind in den Unteransprüchen angegeben.

Danach ist ein Verfahren der eingangs genannten Art gekennzeichnet durch eine winkelbezogene Erfassung der Verteilung des Gutstroms im Abwurfbereich mittels des mindestens einen Radarsensors. Unter winkelbezogener Erfassung sei vorliegend die Erfassung des Gutstroms in einem - vorzugsweise weiten - Winkelbereich des Abwurfbereichs des Gutstroms gemeint, die letztlich die Erfassung der winkelbezogenen Verteilung des Gutstroms bezweckt.

Die winkelbezogene Erfassung des Gutstroms kann prinzipiell auf unterschiedliche Art und Weise erfolgen:

In einer vorteilhaften Ausführungsform der Erfindung sind im Abwurfbereich des Gutstroms (bspw. am Randbereich der Scheibe) ein oder mehrere Radarsensoren linear oder matrixartig auf zumindest einem Schwenkarm angeordnet. Eine hohe Winkelauflösung der Abtastung des Gutstroms wird hierbei durch Schwenken des Schwenkarms mit mindestens einem Radarsensor erreicht.

Ferner kann eine winkelbezogene Erfassung des Gutstroms auch durch den simultanen Einsatz mehrerer Radarsensoren erfolgen, die bspw. in einer teilkreisförmigen Anordnung im Abwurfbereich des Gutstroms (bspw. im Randbereich der Scheibe) ausgerichtet sind.

Das hierbei zum Einsatz kommende Radarsystem ist vorzugsweise ein unmoduliertes (CW) oder ein frequenzmoduliertes (FMCW) Dauerstrichradar, deren Sender während der Dauer des Messvorganges ununterbrochen arbeitet. Das Radarsystem kann darüber hinaus auch ein Puls-Doppler-Radar, ein Chirp-Radar mit elektronisch und mechanisch schwenkbaren Antennen sowie Kombinationen sämtlicher genannten Radarsysteme sein. Durch simultanen Einsatz mehrerer Radarsensoren bzw. durch die Bewegung eines oder mehrerer Radarsensoren können in der weiteren Verarbeitung Verfahren der synthetischen Apertur eingesetzt werden.

In einer besonders bevorzugten Ausführungsform der Erfindung erfolgt die Erfassung der Gutstromparameter mittels eines Doppler-Dauerstrichradars mit Mischer und Ausgabe des Schwebungssignals. Der Gutstrom bewegt sich hierbei durch den Sende- / Empfangsbereich des mindestens einen Radarsensors.

Als Zielgrößen sind die Verteilung des Gutstroms im Abwurfbereich von der letztendlichen flächigen Verteilung, das heißt der Deposition zu unterscheiden. Die Ermittlung der Deposition erfordert wesentlich erweiterte komplexe Verarbeitungsschritte, die im folgenden dargestellt werden.

Bei der Erfassung bewegter Objekte mittels Dopplerradar erfolgt eine geschwindigkeitsproportionale Frequenzverschiebung des reflektierten Signals aufgrund des Dopplereffekts, welche vorzugsweise mit einem Mischer im Sensor durch Mischung mit dem Sendesignal als Zwischenfrequenzsignal (Schwebung mit Dopplerfrequenz) ausgewertet wird:

$$f_D = 2 \cdot f_o \cdot \frac{v}{c_o} \cdot \cos(\alpha) \qquad (1)$$

$f_D$      Dopplerfrequenz
$f_o$      Sendefrequenz des Radars
$v$      Betrag der Geschwindigkeit des bewegten Objekts
$c_o$      Lichtgeschwindigkeit
$\alpha$      Winkel zwischen der Bewegungsrichtung des Objekts und der Verbindungslinie Sensor-Objekt

Das Verhältnis von empfangener Leistung zu gesendeter Leistung, also die empfangene Signalleistung (Amplitude) nach diffuser Reflexion an einem Objekt, berechnet sich nach der Radargleichung wie folgt:

$$\frac{P_e}{P_s} = \frac{g^2 \cdot \lambda^2 \cdot \sigma}{(4\Pi)^3 \cdot D^4} \qquad (2)$$

$P_e$      Leistung des empfangenen Signals
$P_s$      Sendeleistung
$\lambda$      Wellenlänge des Sendesignals (z.B. 12 mm bei 24 GHz)
$\sigma$      Rückstreuquerschnitt eines Objekts
$D$      Abstand Radarsensor zum Objekt
$g$      Antennengewinn bei gleicher Sende-/Empfangsantenne

Eine analytische Bestimmung des Rückstreuquerschnitts σ (Radarquerschnitt (Radar Cross section RCS), Rückstrahlfläche) ist nur bei einfachen Körpern möglich und ist abhängig vom Verhältnis der Strukturabmessungen des Körpers zur Wellenlänge. Quantitativ gibt der Radarquerschnitt eine effektive Fläche an, die die einlaufende Welle einfängt und isotrop in den Raum abstrahlt. Die vorgenannte Formel (2) gilt nur für den optischen (frequenzunabhängigen) Bereich, also für Objekte, deren Abmessungen etwa zehnmal größer als die Wellenlänge sind.

Die hier betrachteten Messobjekte des Gutstroms sind meist kleiner als die Wellenlänge des anstrahlenden Radars, z.B. 12 mm bei 24 GHz. Es treten daher Resonanzerscheinungen auf, die den Rückstreuquerschnitt σ der Objekte (Gutstrompartikel) deutlich erhöhen. Die spektrale Energiedichteverteilung des Dopplerradarsignals liefert also sowohl die Information zur Geschwindigkeitsverteilung des Gutstroms über die Frequenz des Signals als auch einen intrinsischen Massebezug über die Amplitude des Signals. Aufgrund des variierenden cos (a) aus der Formel (1) ist die spektrale Energiedichte "gedehnt".

Die weitere Verarbeitung zur Ableitung der Deposition erfolgt erfindungsgemäß auf der Grundlage der Ballistik. Hierbei fließt ein materialspezifischer "ballistischer Koeffizient" BK in die Berechnung ein. Der BK ist eine Funktion von Masse, Größe bzw. Querschnittsfläche und aerodynamischen Eigenschaften (Luftwiderstand, drag coefficient) und empirisch zu ermitteln. Vereinfachend ist der BK für bestimmte Materialklassen bzw. Stoffgruppen zu ermitteln. Für mineralische Dünger wären dies bspw. geprillte kugelförmige Dünger, Splitte, d.h. grob gebrochene Mineraldünger und Pulver, d.h. fein zerkleinerte Mineraldünger. Für die Bewegung kleiner Objekte in Luft bei mittleren Geschwindigkeiten ergeben sich folgende gekoppelte Differentialgleichungen:

$$\frac{d^2x}{dt^2} = -BK \cdot v(t)^2 \cdot \cos(\phi(t))$$

$$\frac{d^2y}{dt^2} = -g - BK \cdot v(t)^2 \cdot \sin(\phi(t)) \qquad (3)$$

| | |
|---|---|
| x | Flugweite |
| y | Flughöhe |
| t | Zeit |
| g | Erdbeschleunigung |
| BK | ballistischer Koeffizient |
| v | Geschwindigkeit |
| φ | Flugwinkel |

Hierzu einsetzbare Verfahren der Frequenzanalyse sind unter anderem analoge oder digitale Filterbank, Wavelet- oder Fouriertransformation.

Erfindungsgemäß sind ferner Optimierungen der Genauigkeit der berechneten Verteilung möglich, welche nachstehend dargestellt werden:

Gemäß einem Ausführungsbeispiel können hierzu empirische Untersuchungen der tatsächlichen Verteilung für bestimmte Stoffklassen und Ermittlung von Korrekturkennfeldern durchgeführt werden, wobei auch die Bildung von Stoffklassen für bestimmte Partikelgemische möglich ist.

Ferner sind die Bestimmung von Korrekturkennfeldern von Stoffklassen und die Auswahl der Stoffklasse in der Praxis vorgesehen. Weitere Genauigkeiten ergeben sich auch bei einer Vorabmessung der tatsächlichen Korngrößenverteilung ("Siebversuch") in der Praxis.

Als vorteilhaft haben sich ferner die Korrektur anhand eines "ballistischen Koeffizienten" (BK) als eine Funktion von Masse, Größe (Querschnittsfläche) und aerodynamischen Eigenschaften (Luftwiderstand, drag coefficient) sowie auch die Korrektur anhand des BK gut-spezifisch vereinfachend für Stoffgruppen sowie die Bildung von einigen praxisrelevanten Klassen, z.B. geprillte Dünger (kugelförmig), splitartig (zerkleinerte Mineraldünger) erwiesen.

Bei einer anderen Ausführung des Verfahrens wird die spektrale Energiedichteverteilung der Geschwindigkeit von Flüssigkeitstropfen bzw. eines Flüssigkeitsstroms erfasst und die Verteilung bestimmt.

Kurzbeschreibung der Zeichnungen

Weitere Ziele, Merkmale, Vorteile und Anwendungsmöglichkeiten des erfindungsgemäßen Verfahrens ergeben sich aus der nachfolgenden Beschreibung mehrerer Ausführungsbeispiele anhand der Zeichnungen.

In den Zeichnungen zeigen

Fig.1 das erfindungsgemäße Verfahren zur Ermittlung der Verteilung eines Gutstroms mittels mehrerer linear angeordneter Radarsensoren;

Fig.2 die erfindungsgemäße Anordnung der Radarsensoren an einer Vorrichtung in Form eines Schleuderstreuers, nämlich auf einem Schwenkarm zur Erfassung des Gutstroms an einer Schleuderscheibe;

Fig.3 die Winkelverteilung des Gutstroms im Abwurfbereich;

Fig.4 das Frequenzspektrum des Radarsignals für einen Winkelbereich;

Fig.5 die flächige Deposition berechnet aus dem Abwurfwinkel und der winkelbezogenen Energiedichtespektren der Geschwindigkeit.

Ausführung der Erfindung

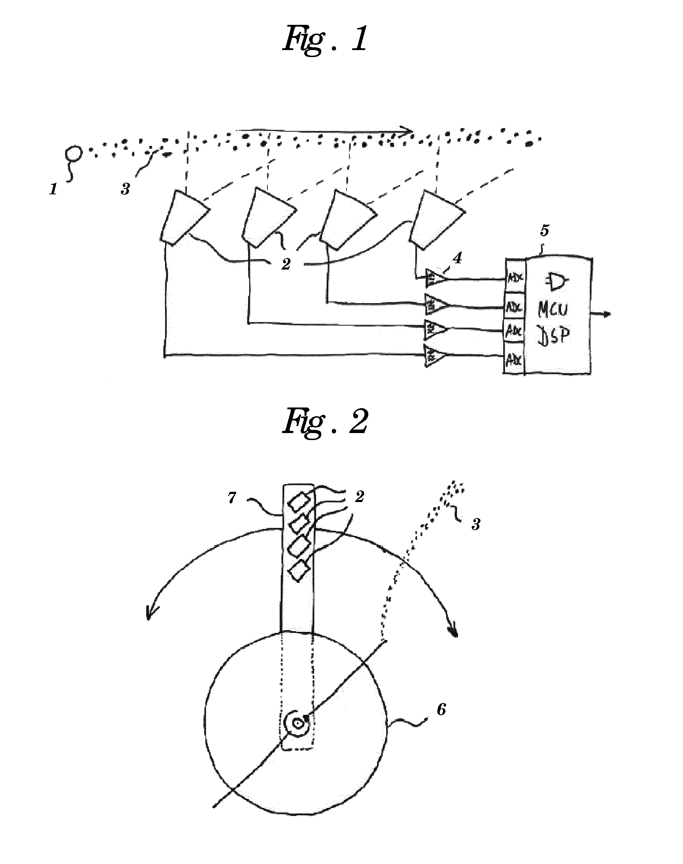

Fig.1 zeigt eine erfindungsgemäße Anordnung der Radarsensoren 2 zur Ermittlung der Verteilung eines Gutstroms 3, welche linear angeordnet sind.

Die Radarsensoren 2 sind hier berührungslos unterhalb des Gutstroms 3 im Gutstromabwurfbereich angeordnet, so dass eine Störung der flächigen Gutstromverteilung ausgeschlossen ist.

Die mittels der Radarsensoren ermittelten Werte werden vorteilhaft jeweils mittels der Filter 4 verstärkt und an einen Mikrocontroller (MCU) weitergegeben. Ein digitaler Signalprozessor (DSP) dient der kontinuierlichen Bearbeitung der digitalen Signale, welche nach Verarbeitung der analogen Signale mittels eines oder mehrerer Analog-Digital-Umsetzer (ADC) ausgegeben werden. MCU und DSP sind innerhalb einer Verarbeitungseinheit 5 angeordnet.

Fig.2 zeigt die erfindungsgemäße Anordnung der Radarsensoren 2 an einer Vorrichtung, nämlich auf einem Schwenkarm 7 zur Erfassung des Gutstroms 3 an einem Partikelstreuer. Wie aus Fig.2 ersichtlich, bezieht sich die vorliegende Ausführungsform der Erfindung auf die Ermittlung der Verteilung eines Gutstroms 3 bei der Verwendung eines Partikelstreuers mit einer zentrifugalen Verteilung der Partikel mittels einer Schleuderscheibe 6.

Der Schwenkarm 7 ist hierbei vorteilhaft über eine Achse im Mittelpunkt der Schleuderscheibe 6 rotierbar bzw. schwenkbar derart angeordnet, dass sich die an dem Schwenkarm 7 in dieser Ausführung linear angeordneten Radarsensoren 2 in einer - zumindest - teilkreisförmigen Rotation entlang dem Gutstromabwurfbereich 1 des Gutstroms 3 schwenken lassen.

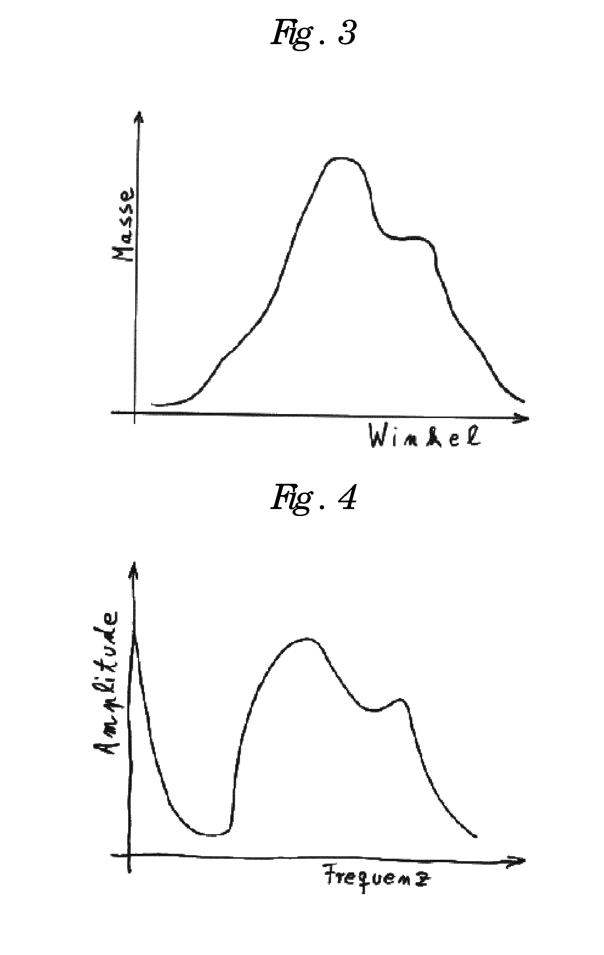

Durch die Bewegung des Schwenkarms 7 wird der Gutstrom winkelbezogen abgetastet. Fig.3 zeigt die berechnete Verteilung der Gutstrom-Masse über den Winkel.

Fig.4 zeigt sodann eine über eine schnelle Fourier-Transformation berechnete Energiedichteverteilung mit Amplitude und Frequenz, integriert über einem Bereich des Schwenkwinkels. Die Frequenz ist dabei proportional zur Geschwindigkeit des Gutstroms.

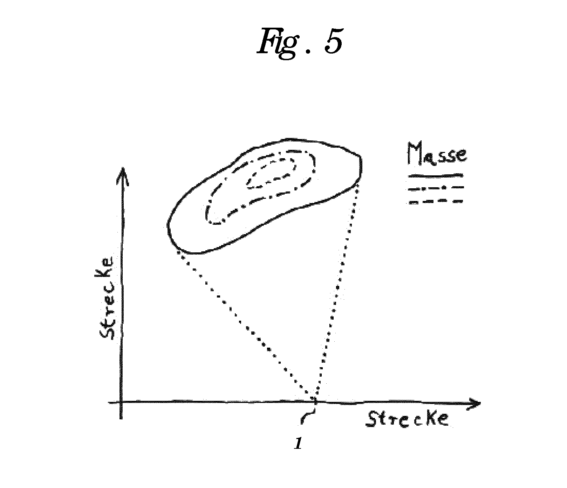

In die Berechnung der Deposition in Fig.5 fließen der Abwurfwinkel des Gutstroms und die jeweils auf einen Winkelbereich bezogenen Energiedichtespektren ein.

Der Abwurfwinkel des Gutstroms 3 wird vorzugsweise über synthetische Apertur über Kreuzkorrelationen der winkelbezogenen Verteilungen der von den Radarsensoren 2 gemessenen Geschwindigkeiten und/oder aus der bekannten tangentialen Abwurfgeschwindigkeit und der gemessenen maximalen Abwurfgeschwindigkeit berechnet.

Aus der spektralen Energiedichteverteilung über den abgetasteten Teilradius (winkelkorreliert) wird sodann mittels ballistischer und trigonometrischer Berechnungsverfahren die Verteilung des Gutstroms auf der Fläche (Deposition) berechnet.

Das erfindungsgemäße Verfahren beschränkt sich in seiner Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

Liste der Bezugsziffern

1 Abwurfpunkt
2 Radarsensoren
3 geworfener Gutstrom
4 Filter / Verstärker
5 Verarbeitungseinheit
6 Schleuderscheibe mit Wurfarmen
7 Schwenkarm mit Radarsensoren

**Patentansprüche**

1. Verfahren zur Ermittlung der Verteilung eines geworfenen Gutstroms (3) im Abwurfbereich sowie dessen Deposition mittels Mikrowellen, umfassend mindestens einen Radarsensor (2), wobei die Erfassung der Gutstromparameter mittels Analyse der geschwindigkeitsproportionalen Frequenzverschiebung des durch die Gutstrompartikel reflektierten Signals aufgrund des Dopplereffekts erfolgt und aus der Amplitude des Dopplersignals die Masse der Gutstrompartikel ermittelt wird,
**gekennzeichnet durch** eine winkelbezogene Erfassung der Verteilung des Gutstroms im Abwurfbereich (1) mittels dem mindestens einen Radarsensor (2).

2. Verfahren nach Anspruch 1,
**dadurch gekennzeichnet,**
**dass** der Abwurfwinkel aus der ermittelten Abwurfgeschwindigkeit sowie der bekannten tangentialen Geschwindigkeit berechnet wird und/oder der Abwurfwinkel aus Kreuzkorrelationen mehrerer Radarsignale ermittelt wird.

3. Verfahren nach den Ansprüchen 1 und 2,
**dadurch gekennzeichnet,**
**dass** aus der spektralen Energiedichteverteilung mittels Verfahren der Ballistik die Verteilung des Gutstroms (3) ermittelt wird.

4. Verfahren nach einem der vorangegangenen Ansprüche,
**dadurch gekennzeichnet,**
**dass** eine Anpassung der flächigen Deposition anhand eines bekannten vorab empirisch zu ermittelnden gutspezifischen ballistischen Koeffizienten BK erfolgt.

5. Verfahren nach Anspruch 4,
**dadurch gekennzeichnet,**
**dass** der anzuwendende BK für bestimmte wenige Materialklassen empirisch festgelegt wird.

6. Verfahren nach einem der vorangegangenen Ansprüche,
**dadurch gekennzeichnet,**
**dass** die spektrale Energiedichteverteilung der Geschwindigkeit von Flüssigkeitstropfen bzw. eines Flüssigkeitsstroms erfasst und die Verteilung bestimmt wird.

7. Verfahren nach einem der vorangegangenen Ansprüche,
**dadurch gekennzeichnet,**
**dass** die Erfassung der Gutstromparameter mittels eines Doppler-Dauerstrichradars mit Mischer und Ausgabe des Schwebungssignals erfolgt.

8. Sensoranordnung, welche so ausgestaltet ist, dass ein Verfahren nach einem der Ansprüche 1 bis 7 durchführbar ist.

9. Sensoranordnung nach Anspruch 8,
**dadurch gekennzeichnet,**
**dass** im Abwurfbereich (1) des Gutstroms (3) ein oder mehrere Radarsensoren linear oder matrixartig und schwenk- oder rotierbar angeordnet sind.

10. Sensoranordnung nach Anspruch 9,
**dadurch gekennzeichnet,**
**dass** ein oder mehrere Radarsensoren (2) auf zumindest einem Schwenkarm (7) angeordnet sind.

11. Sensoranordnung nach Anspruch 8,
**dadurch gekennzeichnet,**
**dass** die winkelbezogene Erfassung des Gutstroms (3) durch den simultanen Einsatz mehrerer Radarsensoren (2) erfolgt.

12. Sensoranordnung nach Anspruch 11,
**dadurch gekennzeichnet,**
**dass** die Radarsensoren (2) in einer teilkreisförmigen Anordnung zueinander im Abwurfbereich (1) des Gutstroms (3) ausgerichtet sind.

13. Vorrichtung mit einer Sensoranordnung nach einem der Ansprüche 8 bis 12,
    **dadurch gekennzeichnet,**
    **dass** sie ein Schleuderstreuer ist.

14. Vorrichtung mit einer Sensoranordnung nach Anspruch 13,
    **dadurch gekennzeichnet,**
    **dass** eine Schleuderscheibe vorgesehen ist, die eine Sensoranordnung aufweist.

# Fig . 1

# Fig . 2

# Fig. 3

# Fig. 4

# Fig. 5

Europäisches
Patentamt

European
Patent Office

Office européen
des brevets

## EUROPÄISCHER RECHERCHENBERICHT

Nummer der Anmeldung

EP 13 15 1550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 300 580 A2 (LELY NV C VAN DER [NL]) 25. Januar 1989 (1989-01-25) * Zusammenfassung * * Spalte 8, Zeile 16 - Zeile 48 * * Spalte 13, Zeile 7 - Zeile 58 * * Spalte 21, Zeile 29 - Zeile 33 * * Ansprüche; Abbildungen * ----- | 1,7-9, 11-14 | INV. A01C17/00 A01C21/00 G01F1/66 |
| Y | DE 197 23 359 A1 (RAUCH LANDMASCHFAB GMBH [DE]) 10. Dezember 1998 (1998-12-10) * Zusammenfassung * * Spalte 3, Zeile 18 - Zeile 31 * * Spalte 3, Zeile 44 - Zeile 58 * * Spalte 4, Zeile 42 - Zeile 52 * * Spalte 8, Zeile 52 - Zeile 68 * * Spalte 9, Zeile 1 - Zeile 14 * * Ansprüche; Abbildungen * ----- | 1-14 | |
| Y,D | EP 2 520 148 A2 (MSO MESSTECHNIK UND ORTUNG GMBH [DE]) 7. November 2012 (2012-11-07) * Zusammenfassung * * Seite 2, Absätze 4,12 * * Seite 3, Absätze 12,16,17 * * Seite 4, Absatz 40 * * Ansprüche; Abbildungen * ----- | 1-14 | RECHERCHIERTE SACHGEBIETE (IPC) A01C G01F |
| A | DE 100 15 034 A1 (AMAZONEN WERKE DREYER H [DE]) 27. September 2001 (2001-09-27) * Zusammenfassung * * Spalte 1, Zeilen 20-28,58-66 * * Spalte 2, Zeile 14 - Zeile 30 * * Ansprüche; Abbildungen * ----- | 1-14 | |
| A,D | DE 10 2009 004114 A1 (AMAZONEN WERKE DREYER H [DE]) 15. Juli 2010 (2010-07-15) * Zusammenfassung * * Ansprüche; Abbildungen * ----- | 1 | |

-/--

Der vorliegende Recherchenbericht wurde für alle Patentansprüche erstellt

| Recherchenort | Abschlußdatum der Recherche | Prüfer |
|---|---|---|
| Den Haag | 18. Juni 2013 | Oltra García, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

..................................................................................

& : Mitglied der gleichen Patentfamilie, übereinstimmendes Dokument

EPO FORM 1503 03.82 (P04C03)

Europäisches
Patentamt

European
Patent Office

Office européen
des brevets

## EUROPÄISCHER RECHERCHENBERICHT

Nummer der Anmeldung

EP 13 15 1550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 10 2008 052269 A1 (RAUCH LANDMASCHFAB GMBH [DE]) 22. April 2010 (2010-04-22) * Zusammenfassung * * Ansprüche; Abbildungen * ----- | 1 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 18. Juni 2013 | Oltra García, R |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument
.................................................................................
& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 15 1550

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-06-2013

| Im Recherchenbericht angeführtes Patentdokument | Datum der Veröffentlichung | Mitglied(er) der Patentfamilie | Datum der Veröffentlichung |
|---|---|---|---|
| EP 0300580 A2 | 25-01-1989 | DE 3887218 D1<br>DE 3887218 T2<br>EP 0300580 A2<br>NL 8701715 A | 03-03-1994<br>11-08-1994<br>25-01-1989<br>16-02-1989 |
| DE 19723359 A1 | 10-12-1998 | DE 19723359 A1<br>FR 2764165 A1 | 10-12-1998<br>11-12-1998 |
| EP 2520148 A2 | 07-11-2012 | DE 102011100244 A1<br>EP 2520148 A2<br>US 2012279314 A1 | 08-11-2012<br>07-11-2012<br>08-11-2012 |
| DE 10015034 A1 | 27-09-2001 | KEINE | |
| DE 102009004114 A1 | 15-07-2010 | KEINE | |
| DE 102008052269 A1 | 22-04-2010 | DE 102008052269 A1<br>FR 2937217 A1 | 22-04-2010<br>23-04-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0619023 B1
- DE 102011012680 B3
- US 6547671 B1
- DE 102004056520 A1
- DE 102009004114 A1
- EP 1610112 B1
- DD 000000214988 A1
- DE 102011100244 A1
- EP 12002983 A1
- US 13461998 A1

**In der Beschreibung aufgeführte Nicht-Patentliteratur**

- **HOFSTEE.** *J. agric. Engng Res.,* 1994, vol. 58, 1-16